# EUROPEAN PATENT APPLICATION

(11) **EP 2 805 651 A1**
(43) Date of publication of application: **26.11.2014**
(21) Application number: 14167948.0
(22) Date of filing: 12.05.2014
(51) Int. Cl.: A47J 31/06

(54) **Espresso coffee filter and coffee machine comprising it**

(30) Priority: 22.05.2013 IT MI20130836
(71) Applicant: Tenacta Group S.p.A., 24052 Azzano S. Paolo (BG) (IT)
(72) Inventor: Morgandi, Arturo, 24052 Azzano S.Paolo (BG) (IT)
(74) Representative: Giannesi, Simona

(57) **Abstract**

The invention relates to an espresso coffee filter (1) comprising a support (10) comprising a first perforated plate (50) for coffee infusion passage, an underlying counter-pressure unit (20, 30, 40) configured to generate a counter-pressure with respect to the coffee infusion coming from the first perforated plate (50), characterised in that it comprises also a second perforated or grid plate (70, 70'), lying above the first perforated plate (50), having holes (72) or apertures (72') of greater size than the size of the holes (72) of the first perforated plate (50). The invention also relates to a machine (100) for the preparation of espresso coffee comprising such a filter (1).

## Description

The present invention relates to an espresso coffee filter and to a machine for the preparation of espresso coffee comprising such a filter.

In particular, the present invention relates to an espresso coffee filter and to a machine for the preparation of espresso coffee working with pre-packaged paper pods containing coffee powder.

EP 2036469 describes a machine for the preparation of espresso coffee starting from coffee powder contained in a water permeable pod. The coffee machine includes a dispensing head having an infusion chamber with a seat for the pod. The bottom of the seat has a perforated disk for the passage of the coffee infusion to an underlying collecting chamber having an outlet in communication with a dispensing mouth. Between the collecting chamber and the outlet mouth there is a pressure relief valve that opens at a predetermined pressure of the chamber (for example 10 bar).

The Applicant has noted that the machine described by EP 2036469 does not allow to obtain long espresso coffee, that is of about 120-150 cc, with good organoleptic qualities (for example as regards creaminess and taste) and relatively short production times.

An object of the invention is to produce a long espresso coffee.

Another object of the invention is to produce a long espresso coffee having good organoleptic qualities.

A further object of the invention is to optimize the quality of a long espresso coffee in terms of taste and creaminess.

In addition, an object of the invention is to produce a long espresso coffee with relatively short production times (e.g., 120-150 cc in 40-50 seconds).

In the present description and claims, short espresso coffee means a coffee of about 20-30 cc.

In the present description and claims, long espresso coffee means a coffee of about 120-150 cc.

The Applicant has noted that, in general, in order to optimize the quality of espresso coffee, it is important that the hot water that arrives on the coffee powder and passes therethrough has temperature, pressure and flow (cc/sec) values within predetermined optimal ranges. For example, in the case of a coffee pod containing about 7 grams of coffee powder, in order to obtain a short coffee (20-30 cc) having good organoleptic qualities it is necessary that temperature is approximately 89-95 °C, pressure about 9-10 bar and flow about 1.2-1.4 cc/sec.

Within the development of a filter capable of producing a long coffee having good organoleptic qualities and with relatively short production times, the Applicant has carried out research and experimental tests adapted to obtain a long coffee with such features using a paper compressed-coffee pod, normally used for the production of short coffee at about 9 -10 bar (for example, of the type according to the ESE or Easy Serving Espresso standard), and a filter for short espresso coffee already available (for example, provided with a perforated disk for the passage of the coffee infusion of the type described by EP 2036469), decreasing the infusion pressure of the filter from 9-10 bar to about 3 bar. This was in order to extract the active ingredient contained in the coffee powder more slowly than in case of producing a short coffee and to optimize the taste of the coffee. However, these tests have given negative results, in particular because of low flow values obtained for the dispensed coffee (about 2 cc/sec) and, consequently, too long production times (about 60-75 seconds for 120-150 cc coffee).

During such research activities, the Applicant has noted that by adding a perforated plate between the lower surface of the aforementioned pod and the perforated disk of the coffee filter, having holes of size greater than that of the holes of the perforated disk, it was possible to obtain higher flow values and, consequently, shorter production times.

Starting from this observation, the Applicant has surprisingly found that with the above-mentioned types of coffee pods it is possible to obtain a long coffee having the above-mentioned features (good organoleptic qualities and relatively short production times) by a coffee filter having a lower perforated plate and an upper perforated plate having holes of size greater than the lower perforated plate.

Without wishing to be limited to any theory, the Applicant believes that the negative results of the tests performed were due to the fact that working at lower infusion pressures (e.g., about 3 bars compared to 9-10 bar used to produce short espresso coffee) -in order to extract the active ingredient contained in the coffee powder during the whole dispensing process of long coffee and, thus, optimize the taste of the coffee- the pod paper tended to adhere to the surface of the perforated disk. This caused a decrease in the coffee flow dispensed despite the decrease in the infusion pressure of the filter. The Applicant believes that the presence of the additional perforated plate between the lower surface of the pod and the perforated disk of the coffee filter, having larger size holes, allows avoiding such adhesion and obtaining higher flows.

In a first aspect thereof, the present invention relates therefore to a filter according to claim 1. In particular, the present invention relates to an espresso coffee filter comprising a support comprising a first perforated plate for coffee infusion passage, an underlying counter-pressure unit configured to generate a counter-pressure with respect to the coffee infusion coming from the first perforated plate, characterised in that it comprises also a second perforated or grid plate, lying above the first perforated plate, having holes or apertures of greater size than the size of the holes of the first perforated plate.

In a second aspect thereof, the present invention relates to a machine for the preparation of espresso coffee according to claim 10. In particular, the present invention relates to a machine for the preparation of espresso coffee, comprising:
- a water reservoir at atmospheric pressure;
- a water heating device;
- a pump for feeding water from the reservoir to the water heating device;
- a seat in fluid communication with the water heating device;
- an espresso coffee filter, according to the first aspect of the invention, housed within said seat.

Preferred features of the filter and machine are shown in the dependent claims.

The present invention, in at least one of the above aspects thereof, can have at least one of the following preferred features.

Preferably, the counter-pressure unit comprises a restraining element. Preferably, the restraining element is made of compressible material, more preferably elastic, for example rubber. In a preferred embodiment, the restraining element is a seal.

In a preferred embodiment, the restraining element is circular. Preferably, the restraining element comprises a circular slot provided with a circular edge.

In a preferred embodiment, the counter-pressure unit comprises a restraining element holder configured to support the restraining element and to press the restraining element towards the first perforated plate.

In a preferred embodiment, the counter-pressure unit comprises, between the first perforated plate and the restraining element, a conveyor configured to convey the coffee infusion to the restraining element.

In a preferred embodiment, the conveyor is a disk. Preferably, the conveyor comprises a collecting chamber for the coffee infusion. More preferably, the collecting chamber comprises radial bosses. The radial bosses are preferably arranged along the disk circumference. The radial bosses preferably project towards the first perforated plate.

In the embodiment comprising the conveyor, the restraining element holder is preferably configured to compress the restraining element toward the conveyor.

Preferably, the filter comprises a seat configured to accommodate a paper compressed-coffee pod.

Advantageously, the seat is shaped like a bowl.

Preferably, the second perforated or grid plate forms at least the bottom of said seat. The side walls of said seat may be integral with the second perforated or grid plate or with the first perforated plate or with the support.

In other words, in the present description and claims, the term perforated or grid plate is not meant to be limited to a substantially flat separate element but the case of a substantially flat perforated or grid element which is integral with an edge so as to form a bowl-shaped element having a perforated bottom is included.

Preferably, said pod complies with the E.S.E. standard.

In a preferred embodiment, the seat is configured to accommodate a coffee pod having a diameter of between about 43.5 and about 44.5 mm.

In one embodiment, the first perforated plate has a diameter of between about 33 and 37 mm.

In one embodiment, the second perforated or grid plate has a diameter of between about 33 and 37 mm.

Preferably, the counter-pressure unit is configured so as to obtain an infusion pressure in said seat of between 1 and 5 bar, preferably about 3 bar.

Preferably, the ratio between the size of the holes or apertures of the second perforated or grid plate and the size of the holes of the first perforated plate is greater than 1.5. Preferably, such a ratio is less than 15, more preferably less than 5.

Further features and advantages of the present invention will appear more clearly from the following detailed description of some preferred embodiments thereof, made with reference to the accompanying drawings. The different features in the single configurations may be combined with one another as desired according to the preceding description, in case of using the advantages resulting specifically from a particular combination.

In such drawings,
- figure 1 shows a perspective view of a coffee filter according to a first embodiment of the invention;
- figure 2 shows a perspective exploded view of the filter in figure 1;
- figure 3 shows a cross-sectional view of the filter in figure 1, along plane A-A in figure 4;
- figure 4 shows a top view of the filter in figure 1;
- figure 5 shows a perspective view of a coffee filter according to a second embodiment of the invention;
- figure 6 shows a perspective exploded view of the filter in figure 5;
- figure 7 shows a sectional view of the filter in figure 5, along plane A-A in figure 8;
- figure 8 shows a top view of the filter in figure 5;

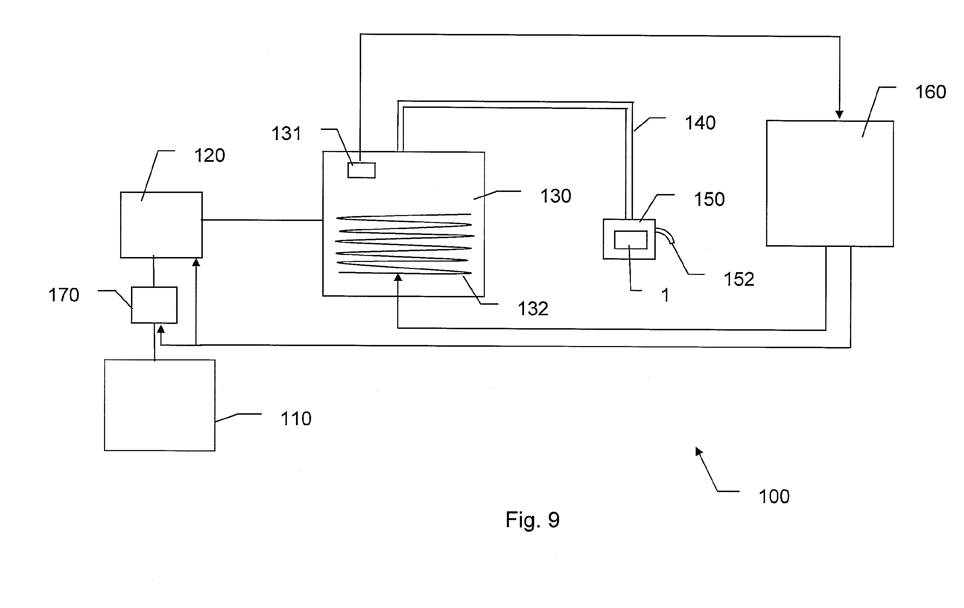

- figure 9 schematically shows an espresso coffee machine according to the invention.

In the following description, identical reference numerals are used for the illustration of the figures to indicate construction elements having the same function.

With reference to the figures, reference numeral 1 globally denotes a filter for long espresso coffee.

Filter 1 is preferably configured to work with pre-packaged paper pods containing compressed coffee powder.

Preferably, the paper pods conform with the E.S.E. standard, i.e. pods using single pre-packaged doses of approximately 7 grams of ground coffee, pressed and sealed between two thin layers of filter paper. These pods typically have a circular shape, diameter from 43.5 to 44.5 mm and thickness from 9.1 to 10.6 mm.

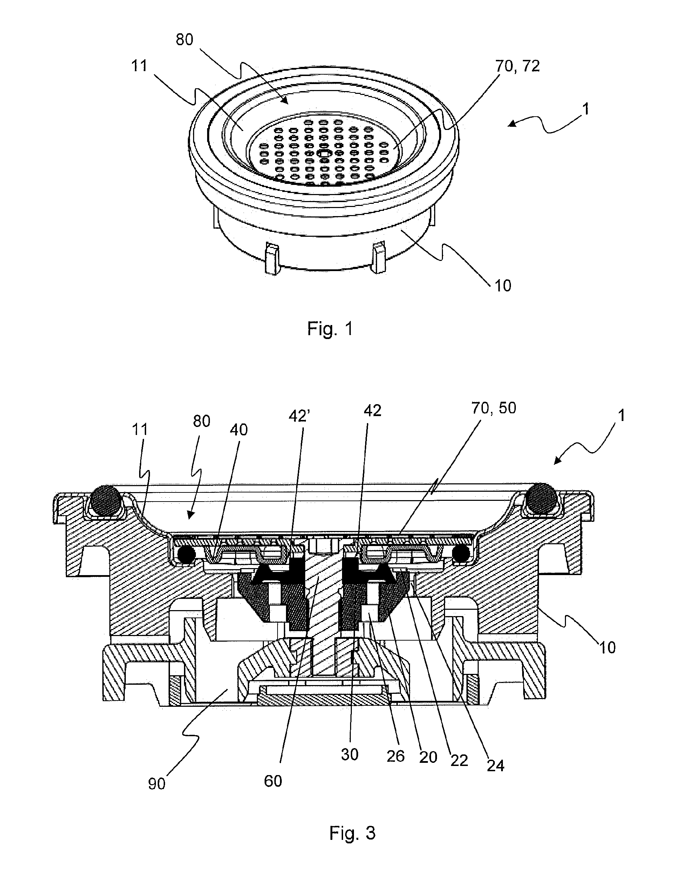

In the embodiment shown in figures 1-4, filter 1 comprises a support 10 accommodating, from above (that is from the side intended to be in contact with the pod) downwards: a second perforated plate 70, a first perforated plate 50, a conveyor 40, a restraining element 30 and a restraining element holder 20.

The first perforated plate 50, conveyor 40, the restraining element 30 and the restraining element holder 20 are provided with a central hole, respectively, 51, 41, 31 and 21, for the passage of an adjustment/fixing screw 60 which allows assembling the various components together. The assembly thus assembled is inserted in a dedicated seat 12 of support 10 and fixed to support 10 by means of screw 60.

The second perforated plate 70 is fixed on the first perforated plate 50, for example by welding. In an alternative embodiment, the second perforated plate 70 may be removably fixed on the first perforated plate 50.

As shown in figure 1, filter 1 comprises a seat 80 configured to accommodate the coffee pod. In the embodiment shown, seat 80 is formed by upper inner walls 11 of support 10 and by the second perforated plate 70, which constitutes the bottom of seat 80.

In another embodiment (not shown), walls 11 may be integral with the second perforated plate 70 or with the first perforated plate 50.

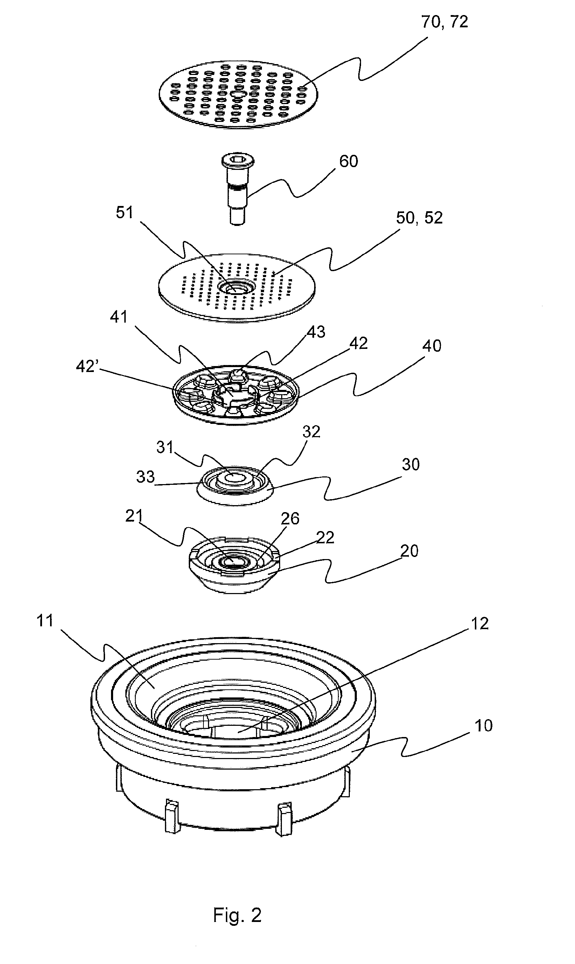

As shown in figure 2, conveyor 40 is configured to collect the coffee infusion passing through holes 52, 72 of the perforated plates 50 and 70 and convey it through the central passages 42 and 42' towards the restraining element 30.

In the embodiment shown, conveyor 40 is a disk with a collecting chamber for the coffee infusion. The collecting chamber is provided with radial bosses 43 which are arranged along the disk circumference and project towards the first perforated plate 50. Such bosses 43 have a dual function: acting as a support for the perforated plate 50 and acting for conveying the coffee infusion to central passages 42, 42' of conveyor 40 itself.

The restraining element 30 has a circular slot 32 configured to collect the coffee infusion coming from the central passages 42, 42' of conveyor 40. The restraining element 30 may, for example, be a rubber seal.

The coffee infusion is collected in the circular slot 32 and then escapes from the circular edge 33 of the circular slot 32 towards a certain number of slots 22 (four are shown in the figure by way of example) arranged on the circular perimeter of the restraining element holder 20. As shown in figure 3, from slots 22 the coffee infusion reaches a dispensing mouth 90 of filter 1 through an annular passage 24 between the outer surface of the restraining element holder 20 and the inner surface of support 10.

In the embodiment shown, for example, the restraining element holder 20 is provided with an annular gap 26 which has the function of providing an air vent during the assembly of the restraining element 30 on the restraining element holder 20.

The restraining element holder 20, which may for example be of stainless steel, or of suitable rigid plastic, is configured to support the restraining element 30 and compress the restraining element 30 against the lower surface of conveyor 40. The restraining element holder 20 is preferably configured to act as a nut to tighten screw 60. By adjusting the screwing of the restraining element holder 20 to screw 60 it is possible to adjust the pressure that the restraining element 30 exerts against the lower surface of conveyor 40 and, therefore, the counter-pressure exerted by the restraining element 30 on the coffee infusion.

Preferably, as explained in more detail hereafter, the counter-pressure exerted by the restraining element 30 is adjusted so as to obtain a desired value of infusion pressure in seat 80.

In the embodiment shown, the second perforated plate 70 and the first perforated plate 50 have a circular shape.

Preferably, the second perforated plate 70 and the first perforated plate 50 are of metal.

The second perforated plate 70 preferably has a thickness between about 0.40 and about 0.60 mm, for example about 0.50 mm, diameter from 33 to 37 mm and is for example made of stainless steel.

The first perforated plate 50 preferably has a thickness between about 0.40 and about 0.60 mm, for example about 0.50 mm, diameter from 33 to 37 mm and is for example made of stainless steel.

The second perforated plate 70 has holes 72 of larger size than holes 52 of the first perforated plate 50.

Preferably, holes 52, 72 of the first and second plate 50 and 70 are circular.

Preferably, holes 72 of the second perforated plate 70 have a diameter between 1.5 and 3 mm, for example 2 mm.

Preferably, holes 52 of the first perforated plate 50 have a diameter between 1 and 0.2 mm, for example 0.50 mm.

Preferably, the ratio between the diameter of holes 72 of the second perforated plate 70 and holes 52 of the first perforated plate 50 is between 1.5 and 15. More preferably, such a ratio is between 1.5 and 5.

Holes 52, 72 of the first and/or second plate 50 and 70 may have a shape other than circular, for example polygonal or oval.

In this case, holes 52, 72 will preferably have sizes such as to ensure a surface extension and surface ratios equivalent to those indicated above for the circular holes.

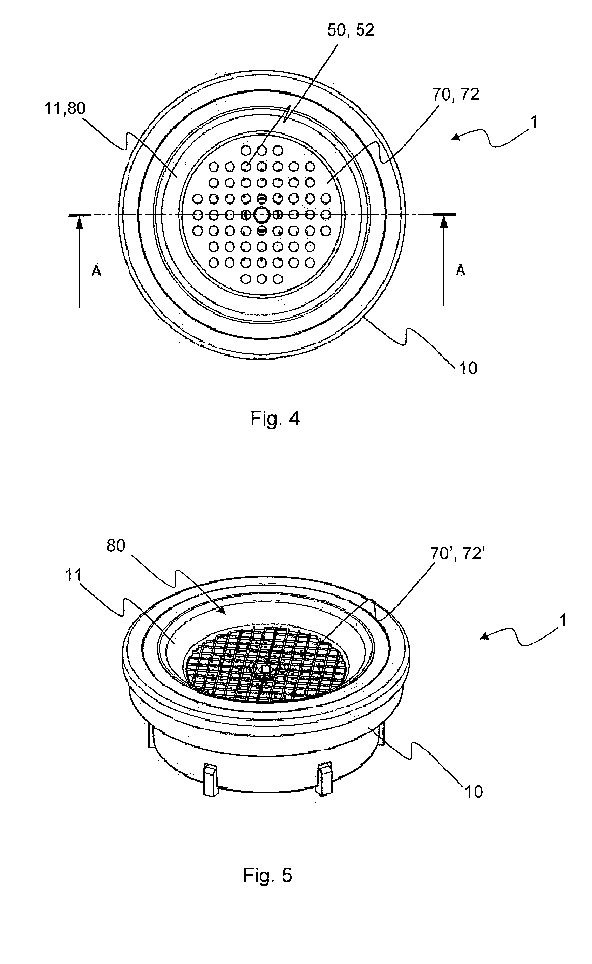

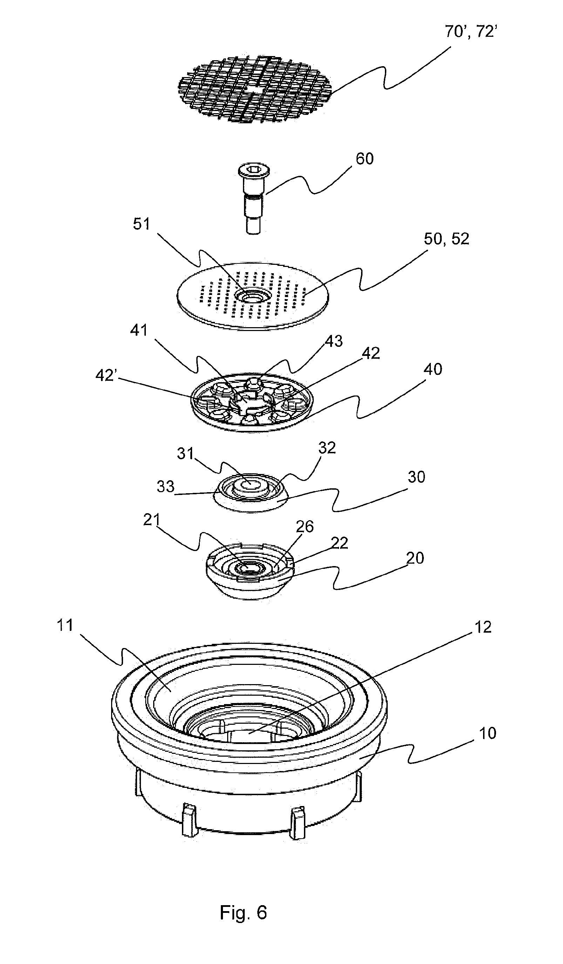

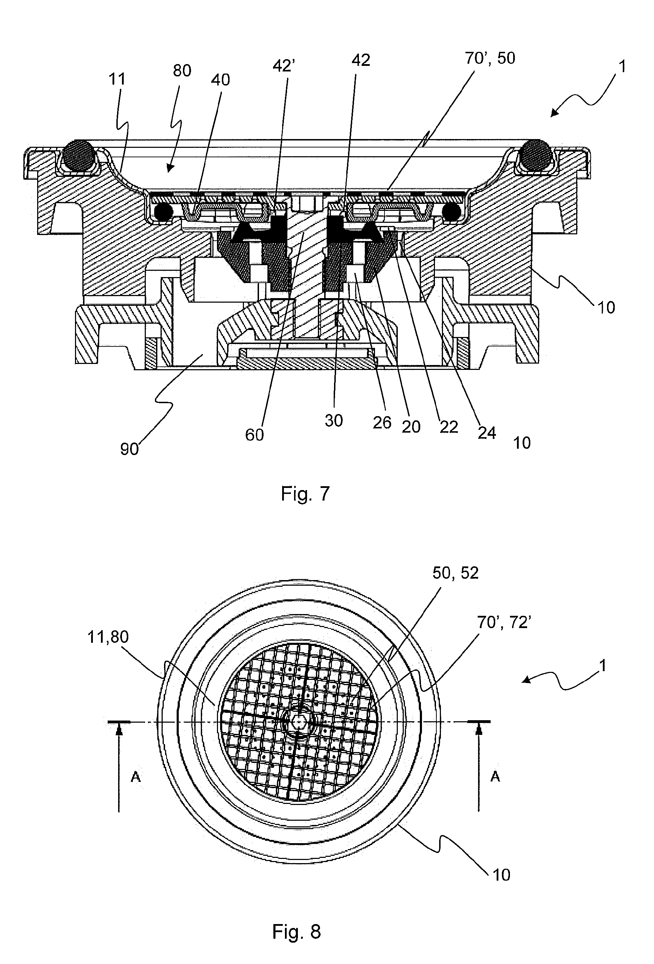

Figures 5-8 show a filter 1 for long espresso coffee according to a second embodiment of the invention.

This second embodiment is similar to that shown in figures 1-4, except for the fact that the second perforated plate 70 is replaced by a second grid plate 70' formed by a grid (preferably metal) provided with apertures 72'.

In the embodiment shown, grid 70' has a circular shape, a thickness of between about 0.40 and about 0.60 mm, for example 0.50 mm, diameter from 33 to 37 mm and is made of stainless steel.

Apertures 72' preferably have a non-circular shape, for example square or hexagonal.

Grid 70' has apertures 72' having size (that is, surface extension) greater than that of holes 52 of the first perforated plate 50.

Preferably, apertures 72' of grid 70' have each a surface extension between 1 and 10 mm², for example, 4 mm².

Preferably, the ratio between the area of each aperture 72' of grid 70' and of holes 52 of the first perforated plate 50 is between 1.5 and 5.

Filter 1 is configured to be used in a machine 100 for the preparation of espresso coffee of the type comprising a reservoir 110 for containing water at atmospheric pressure, a water heating device 130 with a heat source 132, a pump 120 for feeding water from reservoir 110 to device 130, a flowmeter 170, a seat 150 configured to accommodate the coffee filter 1, a conduit 140 for feeding hot water from device 130 to seat 150, at least one sensor 131 associated with the water heating device 130 and a control device 160.

The water heating device 130 can be, for example, a conventional boiler of the stagnant water type or a conventional instant hot water generator wherein water does not stagnate and is heated by flowing, for example, along a labyrinth path.

The heat source 132 typically is an armoured electrical resistance of the conventional type.

The temperature sensor 131 is, for example, a conventional negative temperature coefficient (NTC) probe.

Flowmeter 170 is adapted to provide device 130 with a predetermined amount of water. Through pump 120 and the counter-pressure exerted by the restraining element 30, a preset nominal flow (cc/sec) is calibrated upon any coffee dispensing request by the user.

Seat 150 is configured to contain filter 1 which, in turn, is adapted to receive the pre-packaged coffee pod. In the embodiment shown, machine 100 also includes a spout 152, in fluid communication with seat 150, adapted to direct the coffee produced within a container (not shown) such as, for example, a cup.

In general, when machine 100 is switched on, the control device 160 is adapted to operate the heat source 132 so as to bring the temperature of the water contained in device 130 to a predetermined optimal temperature, preferably about 89-95 °C.

Machine 100 may further comprise suitable indicator means (not shown) adapted for indicating to the user that the appliance is ready for use, once the optimal temperature for the water contained in device 130 is reached.

In case of coffee dispensing request by the user, the control device 160 is adapted to activate the flowmeter 170 and pump 120 so as to pump a predetermined quantity of water from reservoir 110 to the water heating device 130 in which the water is heated.

The hot drink is produced thanks to the arrival of hot water in seat 150 and the hot water flow through the pod (not shown) accommodated in seat 80 of filter 1 inserted in seat 150.

An infusion pressure is created at seat 80 generated by the combination of thrust of pump 120, resistance exerted by the pod to the passage of water in the same and resistance exerted by the restraining element 30 present in filter 1.

Preferably, machine 1 and, in particular, the control unit 160, flowmeter 170, pump 120, the pod, the restraining element 30 and the restraining element holder 20 are configured so as to obtain an infusion pressure of between about 1 and 5 bar, more preferably about 3 bar. This is in order to obtain a long espresso coffee, of about 120-150 cc, creamy and of good taste.

The Applicant has found that, once machine 1 has been configured to obtain such infusion pressure values, the presence of the second perforated plate 70 or grid plate 70', having the above features, allows obtaining a flow comprised between 2 and 4 cc/sec, more preferably about 3 cc/sec, for the coffee infusion coming out of spout 152. This advantageously allows producing a long coffee of about 120-150 cc which is creamy, of excellent quality and in a relatively short time (e.g., 40-50 sec).

Filter 1 of the invention advantageously allows producing long espresso coffee, of about 120-150 cc, having the above-mentioned features, using espresso coffee machines and paper pods of compressed coffee (advantageously of the type conforming to the E.S.E. standard) that are already available for the production of short espresso coffee.

In particular a user, having such an espresso coffee machine and such paper pods available, has the option to make long or short espresso coffee simply by entering the appropriate filter in seat 150 of machine 1: filter 1 of the invention for the production of long espresso coffee and a filter for short espresso coffee (for example totally similar to filter 1, without the second plate 70, 70') for the production of short espresso coffee. This latter filter will be set to generate a higher infusion pressure in seat 80 (for example, 9-10 bar), for example by a suitable adjustment of the screwing of the restraining element holder 20 to screw 60 and, therefore, of the pressure that the restraining element 30 exerts against the lower surface of conveyor 40.

## Claims

1. Espresso coffee filter (1) comprising a support (10) comprising a first perforated plate (50) for coffee infusion passage, an underlying counter-pressure unit (20, 30, 40) configured to generate a counter-pressure with respect to the coffee infusion coming from the first perforated plate (50), **characterised in that** it comprises also a second perforated or grid plate (70, 70'), lying above the first perforated plate (50), having holes (72) or apertures (72') of greater size than the size of the holes (72) of the first perforated plate (50).

2. Filter (1) according to claim 1, wherein the counter-pressure unit (20, 30, 40) comprises a restraining element (30) having a circular slot (32) provided with a circular edge (33).

3. Filter (1) according to claim 2, wherein the counter-pressure unit (20, 30, 40) comprises a restraining element holder (20) configured to support the restraining element (30) and to press the restraining element (30) towards the first perforated plate (50).

4. Filter (1) according to claim 2 or 3, wherein, between the first perforated plate (50) and the restraining element (30), the counter-pressure unit (20, 30, 40) comprises a conveyor (40) configured to convey the coffee infusion towards the restraining element (30).

5. Filter (1) according to claim 4, wherein the conveyor (40) is a disk with a collecting chamber for the coffee infusion, said collecting chamber comprising radial bosses (43) arranged along the disk circumference and projecting towards the first perforated plate (50).

6. Filter (1) according to claim 1, comprising a seat (80) configured to house a paper compressed-coffee pod.

7. Filter (1) according to claim 6, wherein the second perforated or grid plate (70, 70') forms at least the bottom of said seat (80).

8. Filter (1) according to claim 6 or 7, wherein the counter-pressure unit (20, 30, 40) is configured so as to obtain an infusion pressure in the range between 1 and 5 bar, preferably about 3 bar, in the seat (80).

9. Filter (1) according to claim 1, wherein the ratio between the size of the holes (72) or apertures (72') of the second perforated or grid plate (70, 70') and the size of the holes (52) of the first perforated plate (50) is comprised between 1.5 and 15.

10. Machine (100) for the preparation of espresso coffee, comprising:
- a water reservoir (110) at atmospheric pressure;
- a water heating device (130);
- a pump (120) for feeding water from the reservoir (110) to the water heating device (130);
- a seat (150) in fluid communication with the water heating device (130);
- an espresso coffee filter (1), according to anyone of the preceding claims, housed within said seat (150).
